# EUROPEAN PATENT SPECIFICATION

(11) **EP 1 460 513 B1**
(45) Date of publication and mention of the grant of the patent: **16.05.2007**
(21) Application number: 04006733.2
(22) Date of filing: 19.03.2004
(51) Int. Cl.: G06F 21/00

(54) **Apparatus and method for preventing unauthorized use of an information processing device**
Gerät und Verfahren zum Verhindern des unberechtigten Gebrauchs eines Informationsverarbeitungsgerät
Appareil et procédé pour prevenir l'usage non-autorisé d'un dispositif de traitement d'information

(30) Priority: 20.03.2003 JP 2003077121
(43) Date of publication of application: 22.09.2004
(73) Proprietor: NEC CORPORATION, Tokyo (JP)
(72) Inventor: Maruyama, Shigeru, Tokyo (JP)
(74) Representative: Betten & Resch

(56) References cited:
- EP-A- 1 176 493
- WO-A-01/23982
- WO-A-01/62018
- WO-A-94/12973
- WO-A-99/42992
- US-A- 6 076 054
- VLOEBERGHS CL ET AL: "LA RECONNAISSANCE DU LOCUTEUR SUR DES LIAISONS PAR VOCODEURS" REVUE HF, SOC. BELGE DES ING. DES TELECOMM. & D'ELECTRONIQUE. OPHAIN, BE, vol. 17, no. 1/2/3, 1993, pages 119-127, XP000417954 ISSN: 0035-3248
- HIGGINS A ET AL: "SPEAKER VERIFICATION USING RANDOMIZED PHRASE PROMPTING" DIGITAL SIGNAL PROCESSING, ACADEMIC PRESS, ORLANDO,FL, US, vol. 1, no. 2, 1 April 1991 (1991-04-01), pages 89-106, XP000393608 ISSN: 1051-2004

## Description

The present invention relates to an information processing device having speech input and processing functions and in particular to a technique of preventing unauthorized use of the information processing device.

With the higher performance of a microprocessor, information processing devices are going multifunctional. For example, a personal-information management function (e.g. address book) may be provided for almost all portable communication devices such as portable telephone devices and PDA (Personal Digital Assistant) devices. In addition, users can obtain chargeable services through such portable communication devices or personal computers connected to the Internet.

When such a portable communication device has fallen into the hands of an unauthorized person, the unauthorized person can easily access not only the important personal information of the authorized user but also chargeable services. Accordingly, there have been proposed several security techniques of preventing the unauthorized use of an information processing device.

A common measure against the unauthorized use is to prompt a user to enter a preset password such as a string of alphanumeric characters. Only when an input password is identical to a previously registered password, the identity of a user is confirmed, thereby permitting the user to use this device. Typically a keypad or keyboard may be used to enter a password.

Alternatively, Japanese Patent Application Unexamined Publication No. 2001-156884 discloses a portable telephone device having speech input and analysis functions to identify the authorized user through voice input. More specifically, a voice pattern of the authorized user is previously registered and is compared with an input voice pattern. When the input voice pattern is identical to the registered voice pattern, the portable telephone device starts ringing to notify the user where it is. Such a voice input technique may be employed to enter a password.

However, the password key-input method cannot reliably identify who enters the password. In the case of the above voice input method, the user must repeatedly sound out the previously registered voice pattern, increasing the possibility of another person knowing the password. Amalicious person may mimic or record the voice of the authorized user. Accordingly, the prior art cannot ensure security against the unauthorized use of an information processing device. Although the password may be changed, frequently changing a password becomes burdensome to a user.

EP 1 176 493 discloses a login method where a user is prompted with some access code which he then repeats as a spoken code. The code is then recognized by the apparatus by some speech recognition method and compared with a pre-recorded speech feature of the user. As a result of the comparison the user either is granted access or access is denied.

WO 01/62018 discloses a telephone with an improved man machine interface. The telephone comprises an address book, and the entries of the address book may be provided with password protection.

An object of the present invention is to provide a security enhancement apparatus and method of reliably preventing the unauthorized use of an information processing device without burdening a user with operations.

According to the present invention, an unauthorized use prevention apparatus as defined in the independent claims are provided. The dependent claims define embodiments of the invention.

The generated password is preferably renewed each time the information processing device is put to use.

The unauthorized use prevention apparatus may further include: a database storing a plurality of entries, each of which includes address information accompanied with a password check flag, wherein, when a request operation occurs, the controller searches the database for address information related to the request operation and, when the password check flag accompanying the address information found indicates that password check is needed, starts an unauthorized use preventing operation.

As described above, an arbitrary password is generated and a user is notified of the generated password. The user sounds out the password to enter a voice signal of the password. The voice signal of the password is verified with respect to both speech feature and password itself to determine whether an unauthorized person uses the information processing device.

Since a password to be sounded out by a user is not fixed but changeable or arbitrary, it is very difficult for another person to imitate the voice of the authorized user and actually impossible to abuse the recorded voice of the authorized user. Further, since a password is changed automatically, there is no need of the user manually changing the password.

Since a single voice input of a password is verified with respect to not only password itself but also speech feature, it is possible to precisely identify an authorized user with such a very simple operation that the user sounds out a generated password, resulting in further enhanced security.

Since a password generated is renewed each time the information processing device is used, the security is ensured even though unauthorized use attempts are repeatedly made.

In addition, a plurality of registered addresses are selectively subjected to password check operation depending on user's setting. Accordingly, there is no need of the user entering the password for all addresses.
Fig. 1 is a block diagram showing a portable telephone device employing an unauthorized use prevention apparatus according to a first embodiment of the present invention;
Fig. 2 is a flowchart showing an unauthorized use preventing operation according to the first embodiment of the present invention;
Fig. 3 is a diagram showing an example of a generated password displayed on screen; and
Fig. 4 is a flowchart showing an unauthorized use preventing operation according to a second embodiment of the present invention;

In this description, taking a portable telephone device as an example of an information processing device preferred embodiments of the present invention will be described.

### 1. First Embodiment

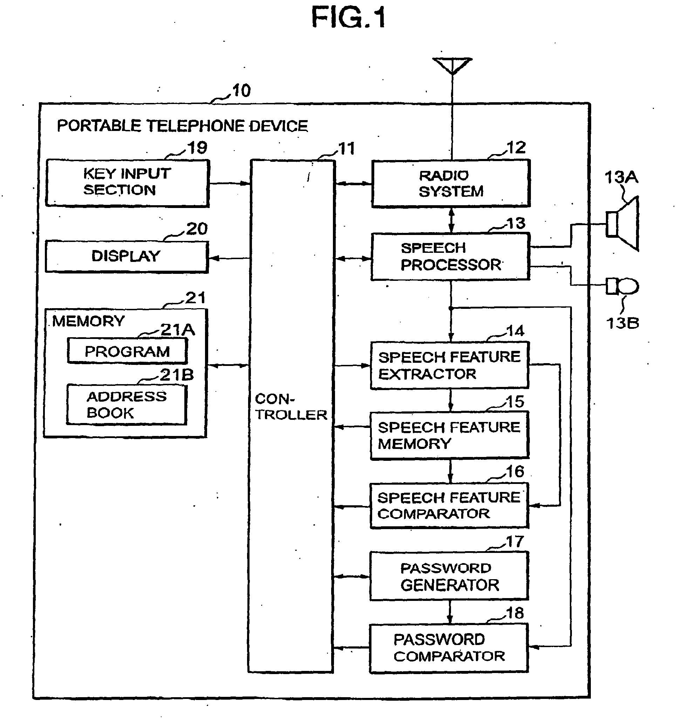

Referring to Fig. 1, a portable telephone device 10 according to a first embodiment of the present invention is provided with a controller 11 which controls the whole operation of the portable telephone device 10, including an unauthorized use prevention control. The controller 11 may be a program-controlled processor such as a DSP (Digital Signal Processor), on which control programs run as described later.

The portable telephone device 10 is further provided with a radio system 12 and a speech processor 13, which-are used for voice and data communication through radio channels under control of the controller 11.

The speech processor 13 has a speaker (telephone-receiver) 13A and a microphone (telephone-transmitter) 13B connected thereto. In the case of telephone communication, input voice received by the microphone 13B is subjected to speech coding for transmission through the radio system 12. In the case of user identity verification, input voice received by the microphone 13B is converted into digital and output to an unauthorized use preventing section as described hereinafter.

The unauthorized use preventing section includes a speech feature extractor 14, a speech feature memory 15, a speech feature comparator 16, a password generator 17, and a password comparator 18.

The speech feature extractor 14 has a function of extracting speech feature data from an input voice signal received from the speech processor 13. The speech feature data represents the voice features of individuals. In the case of speech feature registration of an authorized user, the speech feature data is output to the speech feature memory 15. In the case of user identity verification, the speech feature data is output to the speech feature comparator. 16.

The speech feature data is biometric information extracted from human voice, like fingerprint or palm print, which can be obtained by well-known identity verification techniques. For example, a voiceprint can be used as a speech feature, which is an individually distinctive pattern of certain voice characteristics that is spectrographically produced.

The speech feature memory 15 previously stores an identifying speech feature data, which is the speech feature data of an authorized user.

The speech feature comparator 16 compares input speech feature data to the identifying speech feature data stored in the speech feature memory 15.

The password generator 17 has a function of generating an arbitrary password based on a random number. Therefore, the password generator 17 generates a renewed password each time the portable telephone device 10 is put to use.

The password comparator 18 compares the password generated by the password generator 17 to an input password recognized from the input voice signal received from the speech processor 13.

A password generated in the present embodiment may be a string of alphanumeric characters, which may include Japanese Kana or Chinese characters. The password generator 17 may randomly select a password from a plurality of passwords, which are previously stored in a memory- In this case, a meaningful word or phrase is preferably used as a password, resulting in reduced possibility of erroneously entering a password by voice input.

Alternatively, a password can be generated without the need of preparing a plurality of passwords. In this case, the password generator 17 generates a password by randomly selecting a string of characters from a plurality of characters. Since a generated password is not always meaningful, the security is made higher. It is possible to combine a randomly selected meaningful string of characters and a randomly selected characters to generate a password.

In the password comparator 18, a well-known speech recognition technique can be used. The password comparator 18 may use speech signals/feature data or text data of passwords for password comparison. In the case of password comparison based on speech signals/feature data, the password generator 17 generates a password as speech signal/feature data. The password comparator 18 compares the speech signal/feature data of the generated password to the input speech signal/feature data of the input password to determine whether input password is identical to the generated password.

In the case of password comparison based on text data, the password comparator 18 translates an input speech signal into text data by using the well-known speech recognition technique and then compares it to the generated password.

The unauthorized use preventing section as described above needs high-speed processing of a large amount of data. Accordingly, the speech feature extractor 14, the speech feature memory 15, the speech feature comparator 16, the password generator 17, and the password comparator 18 may be implemented in a dedicated microprocessor. Programs running on a DSP may implement at least part of the unauthorized use preventing section. Alternatively, when the controller 11 has a high level of performance, at least part of the unauthorized use preventing section can be implemented in the controller 11.

The portable telephone device 10 is further provided with a key input section 19 and a display 20. The key input section 19 has a function of detecting operations of various keys including ten-key, menu key and function key.

The display 20 may be a liquid-crystal display (LCD) device, which displays necessary information and images on screen under the control of the controller 11. In the present invention, the display 20 has a function of notifying a user of a password generated by the password generator 17. The generated password is displayed by the display 20 so that the user sounds out it.

The password notifying means is not limited to the display 20. Any means of notifying the user may be employed. For example, the controller 11 produces a voice synthesis signal from a generated password and controls the speech processor 13 to sound out the generated password from the speaker 13A.

The memory 21 stores programs 21A to be executed on the controller 11 and necessary data for the processes- The programs 21A include a security enhancement program, or an unauthorized use preventing program, according to the present invention. The necessary data includes, for example, an address book, which is a database for retrieving a destination address or telephone number. The programs 21A may be written onto a ROM and the ROM is inserted to the portable telephone device 10. The programs 21A may be written onto the memory 21 through the controller 11 from outside. Alternatively, the programs 21A may be installed into the memory 21 by downloading them from a program delivery server on a data communication network through a radio channel.

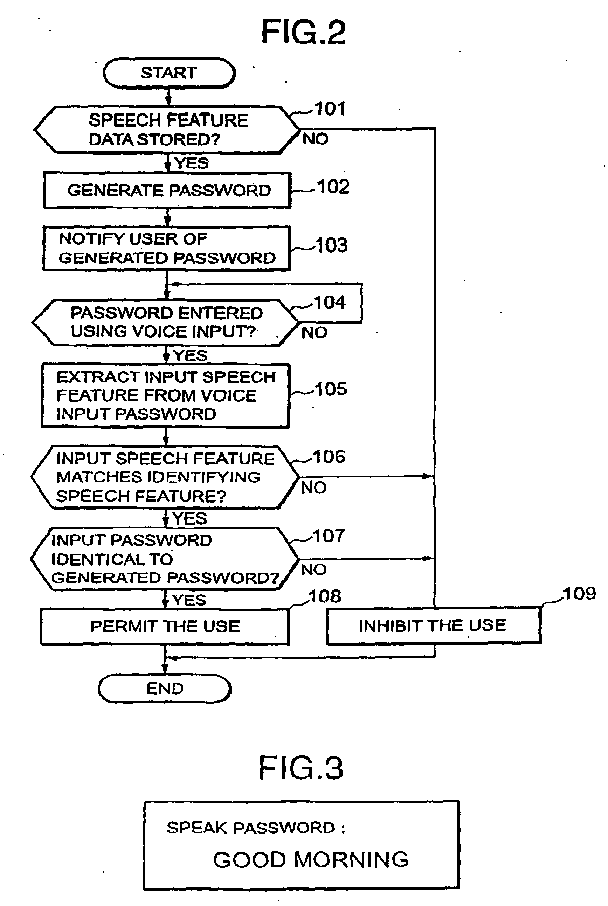

Next, an unauthorized use preventing operation of the portable telephone device 10 will be described with reference to Figs. 2 and 3.

### 1.1) Registration

First, the authorized user sets the portable telephone device 10 to a voice registration mode and then registers the identifying speech feature data onto the speech feature memory 15. For example, the user sounds out various alphanumeric characters and/or a plurality of predetermined words or phrases so that the speech processor 13 inputs voice signals from the microphone 13B. The speech processor 13 discriminates various voice signals to output them to the speech feature extractor 14. The speech feature extractor 14 extracts a speech feature from each voice signal and stores them as identifying speech feature data into the speech feature memory 15.

### 1.2) Permission/Inhibition Judgment

It is assumed that a user wishes to use the portable telephone device 10 to make a call. When the user operates the keypad to make a call, the key input section 19 detects the call request operation and informs the controller 11. In advance of actual calling instruction, the controller 11 performs the unauthorized use preventing operation to determine whether the call request is to be permitted or inhibited, as shown in Fig. 2.

Referring to Fig. 2, the controller 11 determines whether the identifying speech feature data has been registered in the speech feature memory 15 (step 101). When the identifying speech feature data is stored (YES in step 101), the controller 11 instructs the password generator 17 to generate a renewed password (step 102). Subsequently, the controller 11 instructs the display 20 to display the generated password and an instruction for speaking it on screen as shown in Fig. 3 (step 103). In the example of Fig. 3, the generated password is "Good Morning" and the user is prompted to sound out "Good Morning"

Thereafter, the controller 11 waits for user's voice input (step 104). When receiving voice input detection from the speech processor 13 (YES in step 104), the controller 11 instructs the speech processor 13 to output the detected voice signal to the speech feature extractor 14 and the password comparator 18. The speech feature extractor 14 is instructed to extract speech feature data from the input voice signal and outputs it as input speech feature data to the speech feature comparator 16 (step 105).

The speech feature comparator 16 is instructed to compare the input speech feature data to the identifying speech feature data stored in the speech feature memory 15 (step 106).

When the input speech feature data matches the identifying speech feature data (YES in step 106), the controller 11 instructs the password comparator 18 to compare the input password recognized in the input voice signal to the generated password received from the password generator 17 (step 107).

When the input password is identical to the generated password (YES in step 107), it is determined that the input voice is the voice of the authorized user and the input password is the generated password. Accordingly, the controller 11 determines that the present user is the authorized user and therefore the present user is permitted to use this portable telephone device 10 (step 108).

When the input speech feature data does not match the identifying speech feature data (NO in step 106) or when the input password is not identical to the generated password (NO in step 107), the present user is not verified and therefore the present user is inhibited to use this portable telephone device 10 (step 109). In the case where no identifying speech feature data is stored in the speech feature memory 15 (NO in step 101), the present user is not verified and therefore the present user is also inhibited to use this portable telephone device 10 (step 109).

When the user is permitted to use the portable telephone device 10 (step 108), the controller 11 accepts the user's input of a telephone number through the key input section 19 and then instructs the radio system 12 to start making a call at the telephone number.

When the user is inhibited to use the portable telephone device 10 (step 109), the controller 11 does not accept any user's input operations and displays a message indicating that the use is inhibited on screen. Alternatively, an alert may be generated by the speech processor 13 and sounded by the speaker 13A to notify the user.

As described above, an arbitrary password is generated and the present user is notified by the display 20 or the speaker 13A of the password. The user sounds out the password to enter a voice signal of the password. The unauthorized use preventing section verifies the voice signal of the password with respect to both speech feature and password itself to determine whether an unauthorized person uses the portable telephone device 10.

Since a password to be sounded out by a user is not fixed but changeable, it is very difficult for another person to imitate the voice of the authorized user and actually impossible to abuse the recorded voice of the authorized user. Further, since a password is changed automatically, there is no need of the user manually changing the password.

Since one voice input of a password is verified with respect to not only password itself but also speech feature, it is possible to precisely identify an authorized user with such a very simple operation that the user sounds out a generated password, resulting in further enhanced security.

Since a renewed password is generated each time the portable telephone device 10 is used, the security is ensured even though unauthorized use attempts are repeatedly made.

It should be noted that the speech feature check steps 106 and the password check step 107 can change their places in the flow as shown in Fig. 2. In the above embodiment, the generated password is entered through voice input before entering telephone number. It is possible to enter the telephone number before entering the generated password.

The comparison system of speech feature and password is not limited to a certain system. A generated password may be arbitrarily determined. Japanese alphabets "a, i., u, e, o", numerals "1, 2, 3, 4, 5", English alphabets "a, b, c, d, e" or an arbitrary combination of these characters may be used.

The user is notified of a generated password by displaying through the display 20 or by sound through the speaker 13A. Any other means of notifying the user of a generated password may be employed.

In the present embodiment, the function of preventing unauthorized use has been described taking the case of making a call as an example. It is apparent that the present invention can be applied to any operation performed by a user.

For example, in the case of incoming call or e-mail, the user usually takes the call by operating an off-hook key or accesses the mailbox by operating appropriate keys. According to the present invention, however, these operations are valid only when it is determined that the use is permitted (step 108) as shown in Fig. 2. If the use is inhibited (step 109), then the off-hook or mailbox access operations are all invalid and a message indicating that the use is inhibited is displayed on screen or an alert may be made by the speaker 13A.

### 2. Second Embodiment

As described before, the portable telephone device 10 is provided with the memory 21 storing an address book 21B (see Fig. 1). The address book is a database capable of managing address information, which contains entries each composed of telephone number, person's name and other information related thereto.

According to a second embodiment of the present invention, each entry of the address book further contains a password check flag in addition to the above address information. A password check operation is performed depending on whether a corresponding password check flag is set. Assuming that the password check flag of an entry has been set, the password check is performed when a telephone number is read from that entry of the address book for making a call. The details will be described hereinafter.

As shown in Fig. 3, the controller 11 determines whether a telephone number for making a call is entered through the key input section 19 (step 201). Here, if the telephone number is entered by the user operating the keypad (YES in step 201), then it is determined that the present user is permitted to user this device 10 (step 218) and the unauthorized use preventing control is terminated.

Contrarily, when the key input is not used to enter the telephone number (NO in step 201), the controller 11 further determines whether the telephone number is read from the address book (step 202). If not (NO in step 202), the control goes back to the step 201 to wait for telephone number input.

When the telephone number is read from the address book (YES in step 202), the controller 11 searches the address book for setting information corresponding to the read telephone number. By looking at the password check flag included in the found setting information, it is determined whether the password check for that telephone number is needed (step 203).

When the password check flag has been reset, that is, the password check is not needed (NO in step 203), it is determined that the present user is permitted to user this device 10 (step 218) and the unauthorized use preventing control is terminated.

When the password check flag has been set, that is, the password check is needed (YES in step 203), the controller 11 performs the following steps 211-219, which are the same as the steps 101-109 of Fig. 2. Accordingly, descriptions of the steps 211-219 are omitted.

As described above, when a user uses the address book to make a call at a telephone number with its password check flag being set, in advance of actual calling instruction, the controller 11 performs the unauthorized use preventing operation to determine whether the call request is to be permitted or inhibited.

Accordingly, only when the password check flag of a registered telephone number is set, the controller 11 starts the unauthorized use preventing operation to determine whether the operating user is permitted to use the device 10. Since password check flags can be selectively set depending on destinations, the user is not always prompted to enter a password, resulting in reduced inconvenience to the user.

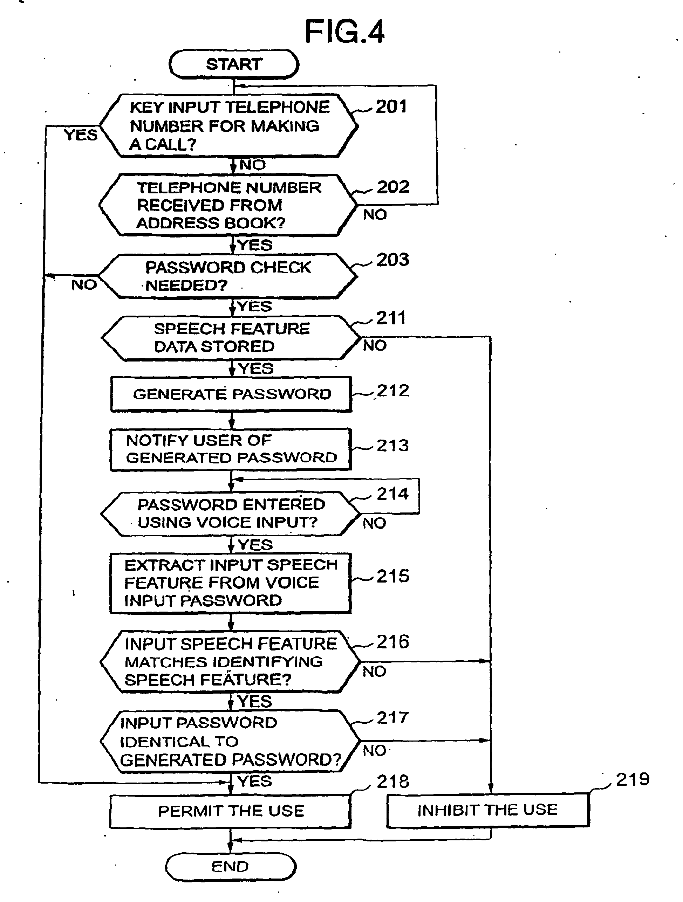

In Fig. 4, at the step 201, if the telephone number is entered by the user operating the keypad, then it is determined that the present user is permitted to user this device 10 (step 218). The present invention is not limited to this control flow. In the case of key input, the control may unconditionally goes to the use inhibition step 219 or to the step 211 as described in the first embodiment, resulting in enhanced security.

Similarly, in the case where the password check is not needed (No in step 203), the control may unconditionally goes to the use inhibition step 219, resulting in enhanced security.

As described in the first embodiment, the second embodiment is not only applied to the case of making a call but also any operation performed by a user. In the case of incoming call or e-mail, the user usually takes the call by operating an off-hook key or accesses the mailbox by operating appropriate keys.

According to the second invention, however, when a use takes an incoming call or mail, the controller 11 searches the address book for the address information (here, source telephone number or source IP address) of the call or incoming mail. When a match is found, the controller 11 looks at the password check flag of the source telephone number or address and, only when the password check flag of the calling telephone number or source address is set, the controller 11 starts the unauthorized use preventing operation to determine whether the operating user is permitted to use the device 10. The off-hook or mailbox open operation is valid only when it is determined that the use is permitted (step 108) as shown in Fig. 4. If the use is inhibited (step 109), then the off-hook or mailbox access operations are all invalid and a message indicating that the use is inhibited is displayed on screen or an alert may be made by the speaker 13A.

In the above-described first and second embodiments, a portable telephone device is taken as an example. The present invention is not restricted to the portable telephone device. As described before, the present invention can be applied to any information processing device equipped with a microphone and a display, that needs security management against accessing chargeable services or reading personal information, for example, wired telephone equipment, personal computer, portable information device such as PDA and the like.

## Claims

1. An apparatus included in an information processing device (10) for preventing unauthorized use of said information processing device, comprising:
a speech feature memory (15) storing identifying speech feature data previously obtained from voice of an authorized user;
a password generator (17) for generating a password which is a string of arbitrary characters;
a password notifying section (20, 13) for notifying a present user of the generated password;
a speech feature extractor (14) for extracting speech feature data from voice of the present user to produce input speech feature data;
a speech feature comparator (16) for comparing the input speech feature data to the identifying speech feature data to produce a speech feature comparison result;
a password comparator (18) for comparing an input password obtained from the voice of the present user to the generated password to produce a password comparison result to carry out an unauthorized use preventing operation;
a controller (11) for determining whether to inhibit the use of the information processing device, depending on the speech feature comparison result and the password comparison result.
wherein the generated password is renewed each time the information processing device is put to use, and said apparatus further comprises:
a database (21B) storing a plurality of entries, each of which includes address information accompanied with a password check flag, wherein, when a request operation occurs, the controller searches the database for address information related to the request operation and, when the password check flag accompanying the address information found indicates that password check is needed, starts an unauthorized use preventing operation, wherein
said controller is adapted in case of an incoming phone call or email to look at the password check flag of the source telephone number or source IP address, and only when the password check flag of the calling telephone number or source address is set, starting the unauthorized use preventing operation to determine whether the user is permitted the off-hook or mailbox open operation.

2. The apparatus according to claim 1, wherein the password notifying section comprises a display section for displaying the generated password on screen so as to prompt the present user to sound out the generated password.

3. The apparatus according to one of claims 1, wherein the password notifying section comprises a speech processor for sounding out the generated password through a speaker so as to prompt the present user to sound out the generated password.

4. The apparatus according to one of claims 1, wherein the information processing device is included in a communication device capable of voice communication

5. The apparatus according to claim 5, wherein the password generator generates a renewed password in response to a request operation of making a call.

6. The apparatus according to claim 5, wherein the password generator generates a renewed password in response to a request operation of taking an incoming call.

7. A method for preventing unauthorized use of an information processing device, comprising:
a) registering identifying speech feature data previously obtained from voice of an authorized user;
b) generating a password which is a string of arbitrary characters;
c) receiving voice of a present user sounding out the generated password:
d) comparing input speech feature data obtained from the voice of the present user to the identifying speech feature data to produce a speech feature comparison result:
e) comparing an input password obtained from the voice of the present user to the generated password to produce a password comparison result to carry out an unauthorized use preventing operation; and
f) determining whether to inhibit the use of the information processing device, depending on the speech feature comparison result and the password comparison result,
wherein the generated password is renewed each time the information processing device is put to use,
the method further comprising:
storing a plurality of entries, each of which includes address information accompanied with a password check flag;
when a request operation occurs, searching the plurality of entries for address information related to the request operation; and
when the password check flag accompanying the address information found indicates that password check is needed, starting the steps b) - f), said method further comprising:
in case of an incoming phone call or email to look at the password check flag of the source telephone number or source IP address, and only when the password check flag of the calling telephone number or source address is set, starting the unauthorized use preventing operation to determine whether the user is permitted the off-hook or mailbox open operation.

8. The method according to claim 7, wherein the generated password is displayed on a display of the information processing device so as to prompt the present user to sound out the generated password.

9. The method according to claim 9, wherein the generated password is sounded out through a speaker of the information processing device so as to prompt the present user to sound out the generated password.

10. A computer program comprising computer executable instructions which when being executed on a computer enable said computer to carry out a method according to one of claims 7 to 9.

## Patentansprüche

1. Einrichtung, die in einer Datenverarbeitungsvorrichtung (10) enthalten ist, um eine unberechtigte Verwendung der Datenverarbeitungsvorrichtung zu verhindern, und umfasst:
einen Sprachmerkmalsspeicher (15) zum Speichern von identifizierenden Sprachmerkmalsdaten, die im Voraus von der Stimme eines berechtigten Anwenders erhalten worden sind;
einen Kennwortgenerator (17) zum Erzeugen eines Kennworts, das eine Kette beliebiger Zeichen ist;
einen Kennwortmitteilungsabschnitt (20, 13), um einem momentanen Anwender das erzeugte Kennwort mitzuteilen;
einen Sprachmerkmalsextraktor (14) zum Extrahieren von Sprachmerkmalsdaten aus der Stimme des momentanen Anwenders, um eingehende Sprachmerkmalsdaten zu erzeugen;
einen Sprachmerkmalskomparator (16) zum Vergleichen der eingehenden Sprachemerkmalsdaten mit den identifizierenden Sprachmerkmalsdaten, um ein Sprachmerkmalsvergleichsergebnis zu erzeugen;
einen Kennwortkomparator (18) zum Vergleichen eines von der Stimme des momentanen Anwenders erhaltenen Eingangskennworts mit dem erzeugten Kennwort, um ein Kennwortvergleichsergebnis zu erzeugen, um eine Operation zum Verhindern einer unberechtigten Verwendung auszuführen;
eine Steuereinheit (11) zum Bestimmen, ob die Verwendung der Datenverarbeitungsvorrichtung gesperrt werden soll, in Abhängigkeit von dem Sprachmerkmalsvergleichsergebnis und dem Kennwortvergleichsergebnis,
wobei das erzeugte Kennwort jedesmal erneuert wird, wenn die Datenverarbeitungsvorrichtung in Gebrauch genommen wird, wobei die Einrichtung ferner umfasst:
eine Datenbank (21 B), in der mehrere Einträge gespeichert sind, wovon jeder Adresseninformationen enthält, die von einem Kennwortprüfmerker begleitet werden, wobei die Steuereinheit dann, wenn eine Anforderungsoperation auftritt, die Datenbank nach Adresseninformationen durchsucht, die mit der Anforderungsoperation in Beziehung stehen, und dann, wenn der die gefundenen Adresseninformationen begleitende Kennwortprüfmerker anzeigt, dass eine Kennwortprüfung notwendig ist, eine Operation zum Verhindern einer unberechtigten Verwendung startet, wobei
die Steuereinheit so beschaffen ist, dass sie im Fall eines ankommenden Telephonanrufs oder einer ankommenden Email den Kennwortprüfmerker der Quelltelephonnummer oder der Quell-IP-Adresse betrachtet und nur dann, wenn der Kennwortprüfmerker der anrufenden Telephonnummer oder der Quelladresse gesetzt ist, die Operation zum Verhindern einer unberechtigten Verwendung startet, um zu bestimmen ob der Anwender die Abnehm- oder Mailboxöffnungs-Operation vornehmen darf.

2. Einrichtung nach Anspruch 1, bei der der Kennwortmeldeabschnitt einen Anzeigeabschnitt umfasst, um das erzeugte Kennwort auf einem Bildschirm anzuzeigen, um so den momentanen Anwender aufzufordern, das erzeugte Kennwort auszusprechen.

3. Einrichtung nach Anspruch 1, bei der der Kennwortmitteilungsabschnitt einen Sprachprozessor umfasst, um das erzeugte Kennwort über einen Lautsprecher auszusprechen, um so den momentanen Anwender aufzufordern, das erzeugte Kennwort auszusprechen.

4. Einrichtung nach Anspruch 1, bei der die Datenverarbeitungsvorrichtung in einer Kommunikationsvorrichtung enthalten ist, die für eine Sprachkommunikation geeignet ist.

5. Einrichtung nach Anspruch 5, bei der der Kennwortgenerator ein erneuertes Kennwort in Reaktion auf eine Anforderungsoperation zum Ausführen eines Anrufs erzeugt.

6. Einrichtung nach Anspruch 5, bei der der Kennwortgenerator ein erneuertes Kennwort in Reaktion auf eine Anforderungsoperation zum Annehmen eines ankommenden Anrufs erzeugt.

7. Verfahren zum Verhindern einer unberechtigten Verwendung einer Datenverarbeitungsvorrichtung, das umfasst:
a) Aufzeichnen von identifizierenden Sprachmerkmalsdaten, die im Voraus von der Sprache eines berechtigten Anwenders erhalten wurden;
b) Erzeugen eines Kennworts, das eine Kette beliebiger Zeichen ist;
c) Empfangen der Stimme eines momentanen Anwenders, der das erzeugte Kennwort ausspricht;
d) Vergleichen der eingehenden Sprachmerkmalsdaten, die von der Stimme des momentanen Anwenders erhalten werden, mit den identifizierenden Sprachmerkmalsdaten, um ein Sprachmerkmalsvergleichsergebnis zu erzeugen;
e) Vergleichen eines eingehenden Kennworts, das von der Sprache des momentanen Anwenders erhalten wird, mit dem erzeugten Kennwort, um ein Kennwortvergleichsergebnis zu erzeugen, um eine Operation zum Verhindern einer unberechtigten Verwendung auszuführen; und
f) Bestimmen, ob die Verwendung der Datenverarbeitungsvorrichtung gesperrt werden soll, in Abhängigkeit von dem Sprachmerkmalsvergleichsergebnis und dem Kennwortvergleichsergebnis,
wobei das erzeugte Kennwort jedesmal erneuert wird, wenn die Datenverarbeitungsvorrichtung in Gebrauch genommen wird, wobei das Verfahren ferner umfasst:
Speichern mehrerer Einträge, wovon jeder Adresseninformationen enthält, die von einem Kennwortprüfmerker begleitet werden;
wenn eine Anforderungsoperation auftritt, Durchsuchen der mehreren Einträge nach Adresseninformationen, die mit der Anforderungsoperation in Beziehung stehen; und
wenn der Kennwortprüfmerker, der die gefundenen Adresseninformationen begleitet, anzeigt, dass eine Kennwortprüfung erforderlich ist, Starten der Schritte b)-f), wobei das Verfahren ferner umfasst:
im Fall eines ankommenden Telephonanrufs oder einer ankommenden Email Betrachten des Kennwortprüfmerkers der Quelltelephonnummer oder der Quell-IP-Adresse und nur dann, wenn der Kennwortprüfmerker der anrufenden Telephonnummer oder der Quelladresse gesetzt ist, Starten der Operation zum Verhindern einer unberechtigten Verwendung, um zu bestimmen, ob der Anwender die Abnehm- oder Mailboxöffnungs-Operation ausführen darf.

8. Verfahren nach Anspruch 7, bei dem das erzeugte Kennwort auf einer Anzeige der Datenverarbeitungsvorrichtung angezeigt wird, um den momentanen Anwender aufzufordern, das erzeugte Kennwort auszusprechen.

9. Verfahren nach Anspruch 9, bei dem das erzeugte Kennwort durch einen Lautsprecher der Datenverarbeitungsvorrichtung ausgesprochen wird, um dem momentanen Anwender aufzufordern, das erzeugte Kennwort auszusprechen.

10. Computerprogramm, das durch einen Computer ausführbare Befehle enthält, die dann, wenn sie auf einem Computer ausgeführt werden, dem Computer ermöglichen, ein Verfahren nach einem der Ansprüche 7 bis 9 auszuführen.

## Revendications

1. Appareil compris dans un dispositif de traitement d'information (10) pour prévenir l'usage non-autorisé dudit dispositif de traitement d'information, comprenant :
une mémoire de caractéristique vocale (15) stockant des données de caractéristique vocale d'identification qui ont été auparavant obtenues à partir de la voix d'un utilisateur autorisé ;
un générateur de mot de passe (17) pour générer un mot de passe qui est une chaîne de caractères arbitraires ;
une section de notification de mot de passe (20, 13) pour notifier le mot de passe généré à l'utilisateur présent ;
un extracteur de caractéristique vocale (14) pour extraire les données de caractéristique vocale à partir de la voix de l'utilisateur présent afin de produire des données de caractéristique vocale d'entrée ;
un comparateur de caractéristique vocale (16) pour comparer les données de caractéristique vocale d'entrée avec les données de caractéristique vocale d'identification afin de produire un résultat de comparaison de caractéristique vocale ;
un comparateur de mot de passe (18) pour comparer un mot de passe d'entrée obtenu à partir de la voix de l'utilisateur présent avec le mot de passe généré afin de produire un résultat de comparaison de mot de passe, dans le but de réaliser une opération de prévention d'un usage non-autorisé ;
un contrôleur (11) pour déterminer s'il faut empêcher l'utilisation du dispositif de traitement d'information, en fonction du résultat de comparaison de caractéristique vocale et du résultat de comparaison de mot de passe,
dans lequel le mot de passe généré est renouvelé à chaque fois que le dispositif de traitement d'information doit être utilisé, et ledit appareil comprend en outre :
une base de données (21B) stockant une pluralité d'entrées, chacune desquelles comprend des informations d'adresse accompagnées d'une option de vérification de mot de passe, dans laquelle, lorsqu'une opération de requête se produit, le contrôleur cherche la base de données pour les informations d'adresse relatives à l'opération de requête et, lorsque l'option de vérification de mot de passe accompagnant les informations d'adresse trouvées indique qu'une vérification du mot de passe est nécessaire, lance une opération de prévention d'un usage non-autorisé, dans laquelle
ledit contrôleur est adapté, en cas d'un appel téléphonique entrant ou d'un e-mail, pour visualiser l'option de vérification de mot de passe du numéro de téléphone source ou de l'adresse IP source, et uniquement lorsque l'option de vérification de mot de passe du numéro de téléphone entrant ou de l'adresse entrante est paramétrée, lançant l'opération de prévention d'un usage non-autorisé afin de déterminer si l'utilisateur est autorisé à décrocher ou à ouvrir la boîte aux lettres électronique.

2. Appareil selon la revendication 1, dans lequel la section de notification de mot de passe comprend une section d'affichage pour afficher le mot de passe généré sur l'écran de façon à inciter l'utilisateur présent à prononcer le mot de passe généré.

3. Appareil selon la revendication 1, dans lequel la section de notification de mot de passe comprend un processeur vocal pour prononcer le mot de passe généré à travers un haut-parleur de façon à inciter l'utilisateur présent à prononcer le mot de passe généré.

4. Appareil selon la revendication 1, dans lequel le dispositif de traitement d'information est compris dans un dispositif de communication adapté à la communication vocale.

5. Appareil selon la revendication 4, dans lequel le générateur de mot de passe génère un mot de passe renouvelé en réponse à une opération de requête de passage d'un appel.

6. Appareil selon la revendication 5, dans lequel le générateur de mot de passe génère un mot de passe renouvelé en réponse à une opération de requête de prise d'un appel entrant.

7. Procédé pour prévenir l'usage non-autorisé d'un dispositif de traitement d'information, comprenant :
a) enregistrer des données de caractéristique vocale d'identification obtenues auparavant à partir de la voix d'un utilisateur autorisé ;
b) générer un mot de passe qui est une chaîne de caractères arbitraires ;
c) recevoir la voix d'un utilisateur présent prononçant le mot de passe généré ;
d) comparer les données de caractéristique vocale d'entrée obtenues à partir de la voix de l'utilisateur présent avec les données de caractéristique vocale d'identification afin de produire un résultat de comparaison de caractéristique vocale ;
e) comparer un mot de passe d'entrée obtenu à partir de la voix de l'utilisateur présent avec le mot de passe généré afin de produire un résultat de comparaison de mot de passe, dans le but de réaliser une opération de prévention d'un usage non-autorisé ; et
f) déterminer s'il faut empêcher l'utilisation du dispositif de traitement d'information, en fonction du résultat de comparaison de caractéristique vocale et du résultat de comparaison de mot de passe,
dans lequel le mot de passe généré est renouvelé à chaque fois que le dispositif de traitement d'information doit être utilisé, le procédé comprenant en outre :
stocker une pluralité d'entrées, chacune desquelles comprend des informations d'adresse accompagnées d'une option de vérification de mot de passe ;
lorsqu'une opération de requête se produit, chercher la pluralité d'entrées pour les informations d'adresse relatives à l'opération de requête ; et
lorsque l'option de vérification de mot de passe accompagnant les informations d'adresse trouvées indique qu'une vérification du mot de passe est nécessaire, lancer les étapes b) à f), ledit procédé comprenant en outre :
en cas d'un appel téléphonique entrant ou d'un e-mail pour visualiser l'option de vérification de mot de passe du numéro de téléphone source ou de l'adresse IP source, et uniquement lorsque l'option de vérification de mot de passe du numéro de téléphone entrant ou de l'adresse entrante est paramétrée, lancer l'opération de prévention d'un usage non-autorisé afin de déterminer si l'utilisateur est autorisé à décrocher ou à ouvrir la boîte aux lettres électronique.

8. Procédé selon la revendication 7, dans lequel le mot de passe généré est affiché sur un écran du dispositif de traitement d'information, de façon à inciter l'utilisateur présent à prononcer le mot de passe généré.

9. Procédé selon la revendication 7, dans lequel le mot de passe généré est prononcé à travers un haut-parleur du dispositif de traitement d'information, de façon à inciter l'utilisateur présent à prononcer le mot de passe généré.

10. Programme informatique comprenant des instructions exécutables de manière informatique, lesquelles, lorsqu'elles sont exécutées sur un ordinateur, permettent audit ordinateur d'exécuter un procédé selon l'une quelconque des revendications 7 à 9.
